# EUROPEAN PATENT SPECIFICATION

(11) **EP 0 546 582 B1**
(45) Date of publication and mention of the grant of the patent: **12.11.1997**
(21) Application number: 92121197.5
(22) Date of filing: 11.12.1992
(51) Int. Cl.: H04N 7/00

(54) **Error correction method and apparatus thereof**
Fehlerkorrekturverfahren und Einrichtung dafür
Méthode de correction d'erreur et dispositif associé

(30) Priority: 13.12.1991 KR 2284291
(43) Date of publication of application: 16.06.1993
(73) Proprietor: SAMSUNG ELECTRONICS CO. LTD., Suwon-city, Kyounggi-do (KR)
(72) Inventor: Kwon, Hee Sung, Anyang-City, Kyungki-Do (KR)
(74) Representative: Grünecker, Kinkeldey, Stockmair & Schwanhäusser Anwaltssozietät

(56) References cited:
- UNION EUROPEENNE DE RADIODIFFUSION. TECH. 3258-F. SPéCIFICATION DES SYSTèMES DE LA FAMILLE MAC/PAQUETS. October 1986, BRUXELLES(BE) pages 270 - 292 'Guide pour la Réalisation du récepteur.'
- ELECTRONICS & WIRELESS WORLD vol. 95, no. 1642, August 1989, SURREY GB pages 754 - 757 , XP38441 P. GARDINER 'NICAM Digital Stereo.'
- IEEE GLOBAL TELECOMMUNICATIONS CONFERENCE & EXHIBITION. COMMUNICATIONS FOR THE INFORMATION AGE. CONFERENCE RECORD vol. 1, 28 November 1988, HOLLYWOOD (US) pages 153 -157, XP124003 N. KAWAI ET AL. 'A System for Multichannel PCM Sound Broadcasting and some Experimental Results'
- IEEE TRANSACTIONS ON CONSUMER ELECTRONICS vol. 37, no. 3, August 1991, NEW YORK US pages 684 - 691 , XP263257 G. SHIPTON ET AL. 'NICAM Decoder for Digital Multi-channel TV Sound Broadcast.'

## Description

### BACKGROUND OF THE INVENTION

The present invention relates to a system for decoding a sound signal which has been coded during a transmission of a D2-MAC signal, and more particularly to an error correction method and the apparatus thereof for use in a decoder for a D2-MAC signal so as to detect and correct an error which has been generated during transmission with respect to D2-MAC sound data companded in a near instantaneous companding audio multiplex (NICAM = Near Instantaneously Contend Audio Multiplexer) method, see Electronics & Wireless World, vol. 95, no 1642, August 1989, SURREY GB, pages 754-757, XP 38441.

Generally, in order to code a D2-MAC sound signal to transmit the coded signal and decode the received signal, a NICAM method is used for a method of companding the sound signal while a parity checking method is used for data protection method. The sound signal of the NICAM method is substantially companded as follows. Sample data of the sound signal composed of 14 bits is classified into 5 units of coding ranges and 7 units of protection ranges according to the amplitude level of sample data. Then, the sound sample corresponding to each of the respective coding ranges is compressed from 14 bits into 10 bits according to a predetermined rule. Here, the predetermined rule is different according to each of the coding ranges, of which the detailed explanation will follow hereinafter. The sound data which has been compressed into 10-bit sound samples for transmission according to the coding ranges is expanded into the original 14-bit sound samples in an expanding portion of the decoder according to each of the protection ranges of the respective sound samples. During such transmission processes, when errors are generated in the sound data, error corrections are also performed.

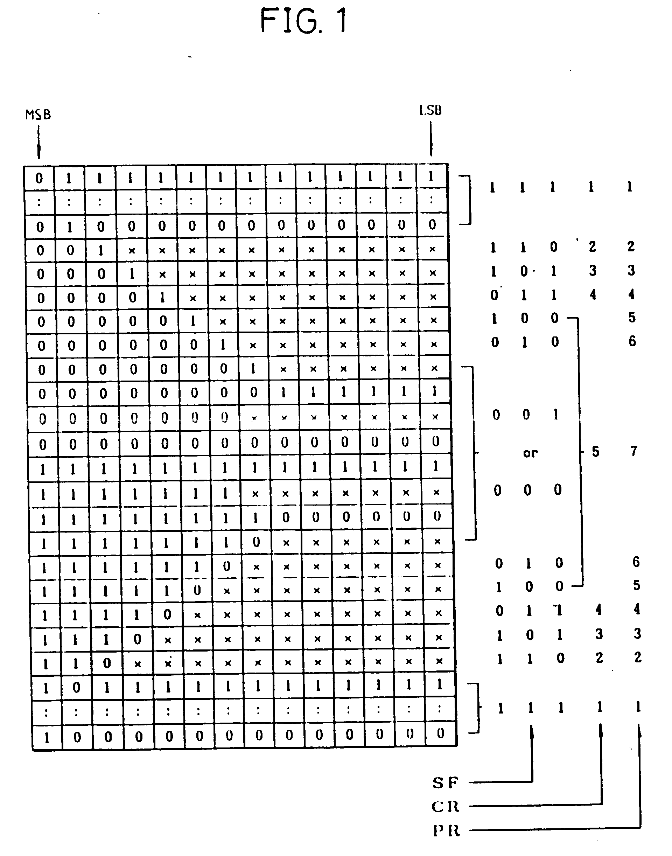

FIG.1 shows a method for assigning coding ranges and protection ranges with respect to the 14-bit sound samples. The coding range (CR) and the protection range (PR) are set according to how many serial bits have the same value as that of the most significant bit (MSB) among the MSB corresponding to a sign bit in the 14-bit sound sample and the subsequent bits next to the MSB. Coding range (CR) provides a reference to compress the 14-bit sound sample into 10 bits while protection range (PR) provides another reference to expand the compressed and transmitted sound samples of 10-bit in the expand portion of the decoder. Protection range (PR) is also used for correcting an error generated in the sound sample during transmission. The protection ranges have more ranges than the coding ranges. The coding range 5 (CR5) corresponds to the protection ranges 5, 6 and 7 (PR5, PR6 and PR7). As described above, the reason why the protection range is wider than the coding range is for deeply protecting the sound samples from errors which have been generated when the sound samples are expanded in the decoder. On the other hand, according as coding range CR and protection range PR of each of the sound samples are determined, a predetermined scale factor SF is determined. As shown in FIG.1, scale factor SF is composed of 3 bits, and the mutual relationship among scale factor SF, coding range CR and protection range PR is represented as in Table 1.

**Table 1**

| CR | PR | SF | | |
|---|---|---|---|---|
| 1 | 1 | 1 | 1 | 1 |
| 2 | 2 | 1 | 1 | 0 |
| 3 | 3 | 1 | 0 | 1 |
| 4 | 4 | 0 | 1 | 1 |
| 5 | 5 | 1 | 0 | 0 |
| 5 | 6 | 0 | 1 | 0 |
| 5 | 7 | 0 | 0 | 1 |
| 5 | 7* | 0 | 0 | 0 |

In Table 1, protection range 7* (PR7*) is a silence period and corresponds to the period having no magnitude of the sound. Each of the bits of the 3-bit scale factor is assigned to a sound sample group composed of a predetermined number of sound samples. The parity bit of the sound sample and one bit of scale factor SF in each group is coded in an exclusive-OR (X-OR) logic and is transmitted together. Then, the decoder performs the parity checking with respect to the transmitted sound samples. The result of the parity checking is decided by majority in a unit of the above-mentioned sound sample group, to obtain a scale factor. If the scale factor SF is is known, protection range PR can be seen as in Table 1. According to protection range PR, the sound samples are expanded.

Coding and decoding of the sound data according to the above NICAM method will be described below in more detail. A data packet of the sound data which is coded and decoded is composed of 64 sound samples. The data packet is classified into two blocks corresponding to a left channel and a right channel, respectively, in case of the stereo sound. Then, the coding range of the sound sample having the highest level among 32 sound samples in each block is determined as the coding range of that block. According to the coding range determined as described above, 14-bit sound samples are compressed into 10-bit sound samples. One example of compressing of the sound samples is represented in Table 2.

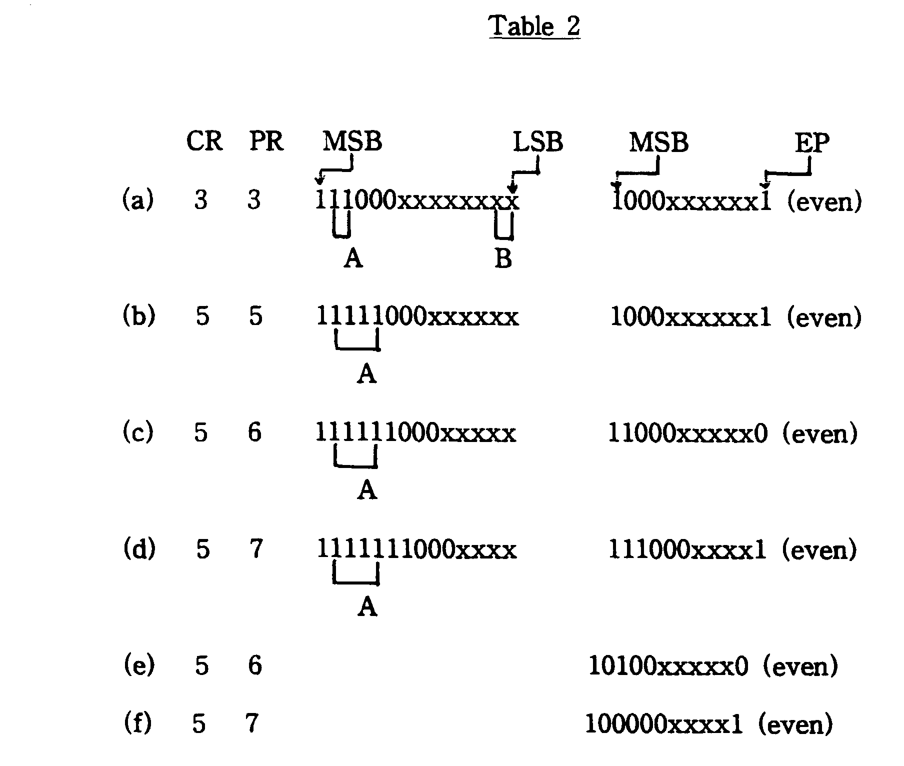

In Table 2, 14-bit sound sample is compressed into 10-bit sound sample and an even parity bit (EP) is added. As represented in (a) to (d) in Table 2, to obtain the compressed sound sample of 10-bit, 4 bits among the 14-bit sound sample are deleted. Here, the deleted 4 bits are differently decided according to the coding range. The bits having the same value as that of the MSB except the MSB are deleted below the MSB. In case that the coding range CR is "3" as in (a) of Table 2, the number of bits having the same value as that of the MSB is two (represented as "A") among the bits subsequent to the MSB. Accordingly, two more bits (represented as "B") are deleted including the LSB. In case that the coding range CR is "5" as in (b), (c) and (d) of Table 2, the number of bits having the same value as that of the MSB and which are subsequent to the MSB are more than four. Accordingly, these subsequent four bits (represented as "A") are deleted. Also, The parity bit of "0" or "1" is added to each of the sound samples, so that existence of errors may be discriminated by the parity checking before expanding of the data in the decoder with respect to the compressed-to-10-bit sound samples. Since the example of Table 2 is limited in the even parity checking, the even parity bit EP is added so that the number of bits having the value of "1" among the higher 6 bits in each of the sound samples may be an even number. Also, the sound samples added with the parity bit are further added with the scale factor during transmission to be transmitted together. The 3-bit scale factor SF as in the aforesaid Table 1 is set with respect to one data packet. The data packet is distinguished into three groups. The scale factor of one bit is set with respect to each of the groups. Then, the scale factor of one bit and the parity bit of each of the sound samples is exclusive-OR-operated. The result of the operation is becomes the LSB of the sound sample which is compressed and transmitted. Such compressed and transmitted sound samples are expanded in the expander of the decoder. The transmitted sound samples are checked before being expanded if errors are generated during transmission. Through such an error checking, that is, the parity check with respect to the transmitted sound samples according to a predetermined rule, the parity error is detected. Then, the result of the parity check is decided by majority in each group of the sound samples. If the parity is an even parity, the value of the scale factor of the group is decided as "0," and if the parity is an odd parity, the value of the scale factor of the group is decided as "1." If the scale factor SF is detected with respect to the data packet of the transmitted sound samples, the protection range PR can be seen as in Table 1. Here, if the protection range PR of the transmitted sound samples is "6," the MSB's of the transmitted sound samples should be the same as the following bit (MSB₋₁) to become normal as in (c) of Table 2. Assuming that the error is generated during transmission, if one bit of the higher 5 bits (MSB to MSB₋₄) of each of the transmitted sound samples is an error bit, it is decided as "odd" through the result of the even parity check which detects errors with respect to the higher 6 bits (MSB to MSB₋₅), thereby detecting whether or not errors are occurred.

However, as shown in (e) of Table 2, when errors are generated in two bits of the higher 5 bits (MSB to MSB₋₄), although the even parity check is performed, it is decided as "even" so as not to accordingly detect errors. Also, when the protection range (PR) is "7," if errors are generated in two bits of the higher 6 bits (MSB to MSB₋₅) as in (f) of Table 2, although the even parity check is performed, it is decided as "even" so as not to accordingly detect errors similar to the above. Compression and expansion of the sound samples using such a conventional NICAM method has a problem that when errors are generated in two or more bits of the sound sample of which the parity check is performed during the error detection by means of the parity check, errors could not be detected. Accordingly, the decoder could not restore the transmitted sound samples into the original sound samples. By this reason, the quality of the decoded sound signals is lowered.

### SUMMARY OF THE INVENTION

Therefore, to solve the above problems, it is an object of the present invention to provide an error correction method for use in a D2-MAC sound signal decoder, in which when coded D2-MAC sound signals are decoded, errors generated with respect to the compressed and transmitted sound samples during transmission are more efficiently detected and are corrected, thereby expanding the compressed sound samples to the original sound samples.

It is another object of the present invention to provide an error correction apparatus for use in a D2-MAC sound signal decoder which is realized in hardware to perform the aforesaid error correction method for use in the D2-MAC sound signal decoder.

Thus, to accomplish one object of the present invention, there is provided an error correction method as claimed in claim 1 for detecting and correcting errors of sound samples to expand compressed and transmitted sound samples to original data by means of a NICAM method for use in a D2-MAC sound signal decoder, the error correction method comprising the steps of: (a) performing a parity check with respect to the compressed and transmitted sound samples; (b) obtaining a protection range with respect to the sound samples having no parity error in the result of the parity check and distinguishing the sound samples according to each of the protection ranges; (c) detecting errors from the sound samples of a predetermined protection range which is distinguished in step (b); (d) deciding by majority of a MSB in which a value of the MSB corresponding to the majority among the MSB's of the sound samples with respect to a predetermined sound sample group composed of the compressed and transmitted sound samples is decided as a MSB of the sound samples of the group; (e) protecting of the MSB in which the MSB's of the sound samples of which errors are detected in step (c) are corrected into another MSB's which are obtained in step (d); and (f) expanding the sound samples of which the MSB's are portected in step (e) according to the protection range.

Another object of the present invention is accomplished by providing an error correction apparatus as claimed in claim 8 for detecting and correcting errors of sound samples to expand compressed and transmitted sound samples to original data by means of a NICAM method for use in a D2-MAC sound signal decoder, the error correction apparatus comprising: a parity checker for receiving the compressed and transmitted sound samples and performing a parity check; means for receiving the sound samples which have been decided to have no parity error and distinguishing the sound samples according to each of the protection ranges; error detection means for receiving the sound samples of a first predetermined protection range supplied from the means for distinguishing the sound samples according to the protection range, and detecting errors from the sound samples; means for deciding a MSB by majority in which a value of the MSB corresponding to the majority among the MSB's of each of the sound samples with respect to a sound sample group composed of a predetermined number of sound samples after receiving the compressed and transmitted sound samples is decided as a MSB of the sound samples of the group; means for protecting the MSB in which the MSB's of the sound samples from which errors are detected in the error detection means are corrected into another MSB's which are obtained in the means for deciding the MSB by majority; and data expanding means for receiving the sound samples of which the parity error is generated in the parity checker, the sound samples distinguished as having no first predetermined protection ranges in the means for distinguishing the sound samples according to the protection range, the sound samples from which errors are not detected in the error detection means, or the sound samples supplied from the MSB protection means, and for expanding predetermined data.

### BRIEF DESCRIPTION OF THE DRAWINGS

FIG.1 is an examplar diagram showing sound data which is processed in a NICAM broadcasting method.

FIG.2 is a block diagram of one embodiment of an error correction apparatus according to the present invention.

FIG.3 is an examplar diagram showing sound data which is processed in the error correction apparatus shown in FIG.2.

### DETAILED DESCRIPTION OF THE PREFERRED EMBODIMENT

A preferred embodiment of the present invention will be described below in more detail with reference to the accompanying drawings.

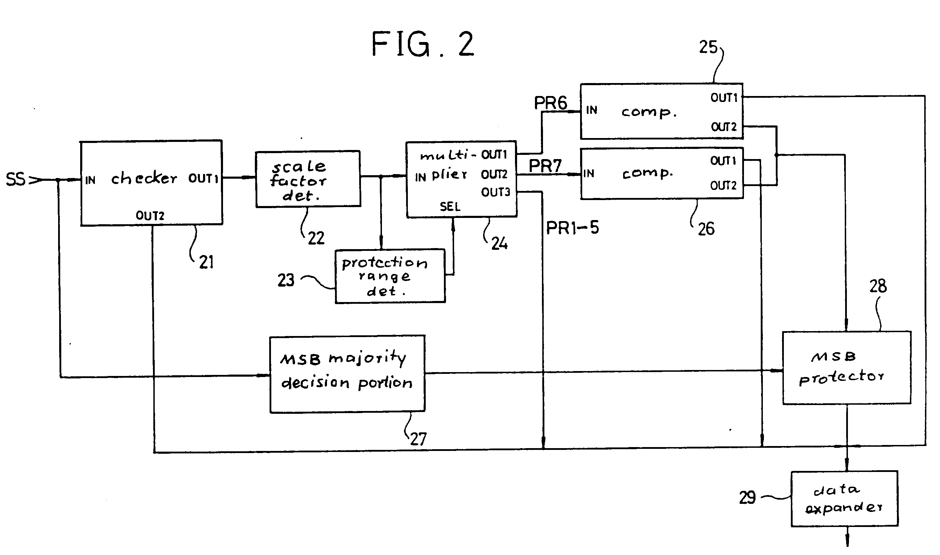

FIG.2 is a block diagram of a part of an error correction apparatus for use in a D2-MAC sound signal decoder according to the present invention. In FIG.2, the error correction apparatus comprises a parity checker 21 for receiving compressed and transmitted sound samples SS and performing a parity checking according to a predetermined rule with respect to the respective sound samples, a scale factor detector 22 for receiving the sound samples having no parity errors in the result of the parity check and detecting a scale factor one-bit-by-one-bit in unit of the sound sample group, a protection range detector 23 for receiving the sound samples and the scale factor supplied from scale factor detector 22 and detecting protection ranges of the sound samples, a multiplexer 24 for receiving the sound samples supplied from scale factor detector 22 and outputting selectively the sound samples according to the output of protection range detector 23, a first comparator 25 for receiving the sound samples being a protection range of 6 supplied from multiplexer 24 and comparing higher two bits (MSB, MSB₋₁) of the respective sound samples, a second comparator 26 for receiving the sound samples being a protection range of 7 supplied from multiplexer 24 and comparing higher three bits (MSB, MSB₋₁, MSB₋₂) of the respective sound samples, a MSB majority decision portion 27 for receiving the compressed and transmitted sound samples SS and deciding a value of a MSB by majority in unit of the sound sample group, a MSB protector 28 for receiving the sound samples of which the comparison values in first comparator 25 or second comparator 26 are mismatched and the MSB value decided in MSB majority decision portion 27 and correcting the MSB of each of the sound samples into the MSB value supplied from MSB majority decision portion 27, and a data expander 29 for expanding the sound samples supplied from parity checker 21, multiplexer 24, first comparator 25, second comparator 26 or MSB protector 28 according to the protection range.

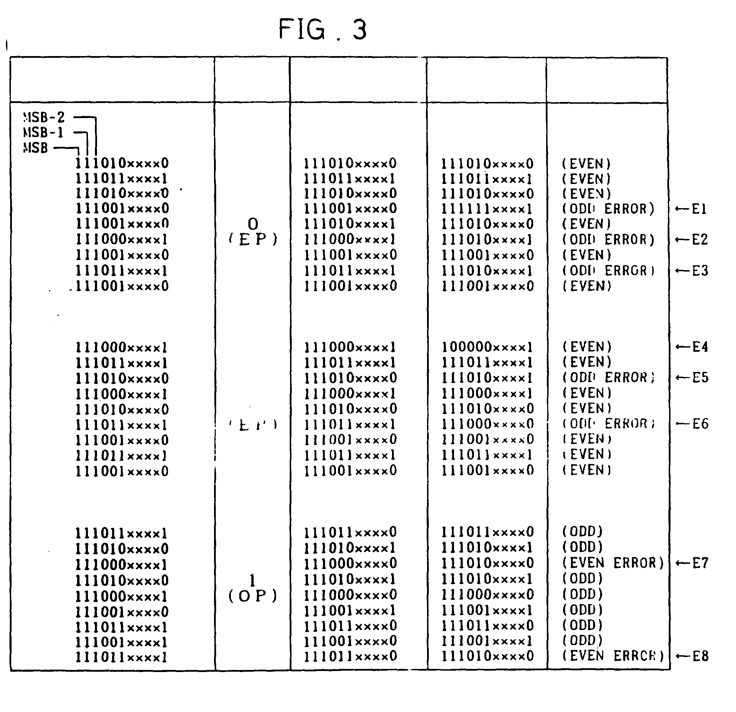

On the other hand, FIG.3 an examplar of the sound samples which have been compressed, transmitted and received in the data block composed of three groups. Each group is composed of nine sound samples and one bit of scale factor SF is assigned to each group. Since scale factor SF of the data block in FIG.3 is "001," it can be seen that protection range PR is "7" from Table 1. The least significant bit (LSB) of of each of the compressed sound samples is a parity bit, which is exclusive-OR-operated with one bit of scale factor SF to become a LSB of each of the transmission sound samples. The received sound samples include the sound samples (E1 to E8) in which errors are generated during transmission. That is, when it is decided as "odd" after the parity check is performed with respect to the sound samples which is applied with even parity EP, or when it is decided as "even" after the parity check is performed with respect to the sound samples which is applied with odd parity OP, it is detected as the sound samples in which errors have been generated. However, when errors are generated in two bits as in the sound samples of "E4," the parity check result is not decided as errors. Accordingly, detection of errors is not performed.

The received sound samples of FIG.3 are input to parity checker 21 and MSB majority decision portion 27 of FIG.2, respectively. Then, parity checker 21 performs even or odd parity checking with respect to the respective sound samples. Thereafter, the sound sample from which the parity error has not been detected is input to a first output terminal OUT1, and the sound sample from which the parity error has been detected is input to a second output terminal OUT2. Scale factor detector 22 receives the sound samples supplied from first output terminal OUT1 of parity checker 21, and obtains one-bit scale factor value of "0" or "1" according to the even parity or odd parity corresponding to majority in the result of the parity check of the sound samples with respect to each of the sound sample groups. The sound samples from which the scale factor is detected in scale factor detector 22 is supplied to data input terminalIN of multiplexer 24 and protection range detector 23. Then, protection range detector 23 detects the protection range from the scale factor of the sound samples input from protection range detector 23, and outputs a differently, individually predetermined selection signal SEL according to the sound sample having the protection range of "6," "7" or " 1 to 5." That is, if the sound sample having the protection range of 6 is detected in protection range detector 23, first output terminal OUT1 of multiplexer 24 is selected by selection signal SEL. If the sound sample having the protection range of 7 is detected in protection range detector 23, second output terminal OUT2 of multiplexer 24 is selected by selection signal SEL. If the sound sample having the protection range of 1 to 5 is detected in protection range detector 23, third output terminal OUT3 of multiplexer 24 is selected by selection signal SEL. Accordingly, multiplexer 24 supplies the sound samples input to data input terminal IN first output terminal OUT1, second output terminal OUT2 or third output terminal OUT3, respectively. The sound samples having protection range of 6 (PR6) supplied through first output terminal OUT1 of multiplexer 24 is supplied to input terminal IN of first comparator 25, which compares higher two bits (MSB, MSB₋₁) of the input sound samples with each other. The reason why the higher two bits are compared is as follows. If protection range PR of the sound samples before being compressed in the coder is "6," the values of the higher six bits including the MSB are the same. Accordingly, if four bits excluding the MSB during compression are deleted, the higher two bits (MSB, MSB₋₁) of the compressed sound samples should have the same values. As a result, the sound samples are normal. When the higher two bits are the same sound samples after comparison, that is, in case of the error-free sound samples, first comparator 25 supplies the sound samples to data expander 29 through first output terminal OUT1. When the higher two bits are not the same sound samples after comparison, that is, in case of the error-occurred sound samples, first comparator 25 supplies the sound samples to MSB protector 28 through second output terminal OUT2.

The sound samples having protection range of 7 (PR7) supplied through second output terminal OUT2 of multiplexer 24 is supplied to input terminal IN of second comparator 26, which compares higher three bits (MSB, MSB₋₁, MSB₋₂) of the input sound samples with each other. At this time, the higher three bits are compared between "MSB" and "MSB₋₁" and between "MSB" and "MSB₋₂."

The reason why the higher two bits are compared in second comparator 26 is because it is normal only when the higher three bits including the MSB after compression of the sound samples having protection range of 7 are the same values. After comparison, when the higher three bits are the same values, that is, in case of the error-free sound samples, second comparator 26 supplies the sound samples to data expander 29 through first output terminal OUT1. When the higher three bits are not the same sound samples after comparison, that is, in case of the error-occurred sound samples, second comparator 26 supplies the sound samples to MSB protector 28 through second output terminal OUT2.

On the other hand, MSB majority decision portion 27 decides the MSB value by majority with respect to each group of the input sound samples. In each group, the MSB value of "0" or "1" corresponding to the majority among the MSB's of the respective sound samples is decided as a MSB of each of the sound samples of the group. Such a MSB of the sound sample group which has been decided in MSB majority decision portion 27 is supplied to MSB protector 28. Then, MSB protector 28 the MSB value having protection range of 6 or 7 which is supplied from second output terminal OUT2 of first comparator 25 or second output terminal OUT2 of second comparator 26 is decided as a MSB value which is supplied from MSB majority decision portion 27. Then, the value of the higher one bit or two bits excluding the MSB is corrected with respect to each of the sound samples. That is, if the input sound sample has the protection range of 6, MSB protector 28 corrects the MSB of the sound sample into a value of the MSB which is supplied from MSB majority decision portion 27, to then correct a value of the bit (MSB₋₁) next to the MSB so as to be the same value as the MSB. If the input sound sample has the protection range of 7, MSB protector 28 corrects the MSB of the sound sample into a value of the MSB which is supplied from MSB majority decision portion 27, to then correct a value of the bit (MSB₋₁) next to the MSB and the bit (MSB₋₂) next to the bit (MSB₋₁) so as to be the same value as the MSB. By doing so, the sound samples in which errors are generated in two bits or more than two bits among the sound samples having protection range of "6" or "7" can be protected.

Data expander 29 receives the sound samples from which the parity error is detected and which are supplied from second output terminal OUT2 of parity checker 21, the sound samples having the protection ranges of 1 to 5 and which are supplied from third output terminal OUT3 of multiplexer 24, the sound samples which are supplied from first output OUT1 of first comparator 25, or the sound samples which are supplied from first output OUT1 of second comparator 26, and expands the sound samples to the 14-bit original sound samples. At this time, in data expander 29, a value of the bit which is inserted from during data expansion according to the protection range PR of the input sound samples is decided. That is, when the protection range of each of the sound samples is one of 1 to 5, the data expansion is performed so that the value of the higher one-bit to five-bit including the MSB in the expanded sound samples is the same as that of the MSB. When the protection range is 6, the data expansion is performed so that the value of the higher 6-bit including the MSB in the expanded sound samples is the same as that of the MSB. Also, when the protection range is 7, the data expansion is performed so that the value of the higher 7-bit including the MSB in the expanded sound samples is the same as that of the MSB. The data which is expanded in data expander 29 is supplied to an interpolator to perform an error correction.

As described above, in the error correction system for use in a D2-MAC sound signal decoder according to the present invention, a predetermined error detection and the error correction thereof are performed with respect to the sound samples having protection range of 6 or 7 among the compressed and transmitted sound samples. Accordingly, errors which could not be detected in the conventional parity check are correctly detected. Also, the errors can be easily corrected as well. Therefore, the sound data which is expanded in the expander of the decoder cab be restored more closely to the original data.

## Claims

1. An error correction method for detecting and correcting errors of sound samples to expand compressed and transmitted sound samples to original data by means of a NICAM method for use in a D2-MAC sound signal decoder, said error correction method is characterized by comprising the steps of:
(a) performing a parity check (21, 22) with respect to the compressed and transmitted sound samples;
(b) obtaining a protection range (23) with respect to the sound samples having no parity error in the result of the parity check and distinguishing the sound samples according to each of the protection ranges;
(c) detecting errors (24, 25, 26) from the sound samples of a first predetermined protection range which is distinguished in step (b);
(d) deciding by majority (27) of a MSB in which a value of the MSB corresponding to the majority among the MSB's of the sound samples with respect to a predetermined sound sample group composed of the compressed and transmitted sound samples is decided as a MSB of the sound samples of the group;
(e) protecting (28) of the MSB in which the MSB's of the sound samples of which errors are detected in step (c) are corrected into another MSB's which are obtained in step (d); and
(f) expanding (29) the sound samples of which the MSB's are portected in step (e) according to the protection range.

2. The error correction method according to claim 1, wherein said error correction method further comprises the steps of:
(g) performing the data expansion with respect to the sound samples in which the parity errors are present in the result of the parity check;
(h) performing the data expansion with respect to the sound samples having a second predetermined protection range in said step (b); and
(i) performing the data expansion with respect to the sound samples from which errors are not detected in step (c).

3. The error correction method according to claim 1, wherein said step (b) comprises the steps of:
(b1) detecting a scale factor with respect to the sound samples in which the parity error is not present in the result of said parity check;
(b2) detecting a protection range in which sound samples having said first predetermined protection range are detected from the sound samples from which the scale factor is detected in said step (b1); and
(b3) multiplexing by selecting the sound samples of said first predetermined protection range among the sound samples of said step (b1) if the sound samples of said first predetermined protection range are detected in said step (b2), and by selecting the sound samples of said second predetermined protection range among the sound samples of said step (b1) if the sound samples of said first predetermined protection range are not detected in said step (b2) and transmitting the selected sound samples.

4. The error correction method according to claim 3, wherein said step (c) comprises the steps of:
(c1) first comparing the MSB with the bit next to the MSB with respect to the sound samples of one of said first predetermined protection range which are obtained in step (b3); and
(c2) second comparing the MSB with each of two bits next to the MSB with respect to the sound samples of the other of said first predetermined protection range which are obtained in step (b3).

5. The error correction method according to claim 4, wherein said step (e) comprises the steps of correcting the MSB of the sound samples into the MSB which is obtained in said step (d), and correcting a value of the bit next to the MSB so as to be the same as that of the MSB, with respect to the sound samples in which two bits are not identical to each other in said step (c1).

6. The error correction method according to claim 4, wherein said step (e) comprises the steps of correcting the MSB of the sound samples in which the MSB is not the same as the bit firstly next to the MSB, the MSB is not the same as the bit secondly next to the MSB, or the MSB is not the same as the bits firstly and secondly next to the MSB, into the MSB which is obtained in said step (d), and correcting values of the bits firstly and secondly next to the MSB so as to be the same sa that of the MSB.

7. The error correction method according to claim 1, wherein said step (f) comprises the step of inserting bit data having the same value as that of each of the sound samples into each of the sound samples by a predetermined number which is determined according to the protection range.

8. An error correction apparatus for detecting and correcting errors of sound samples to expand compressed and transmitted sound samples by means of a NICAM method to original data for use in a D2-MAC sound signal decoder, said error correction apparatus is characterized by comprising:
a) a parity checker (21) for receiving said compressed and transmitted sound samples and performing a parity check;
b) means (22) for receiving the sound samples which have been decided to have no parity error and distinguishing the sound samples according to each of the protection ranges;
c) error detection means (23, 24, 25, 26) for receiving the sound samples of a predetermined protection range supplied from said means for distinguishing the sound samples according to the protection range, and detecting errors from the sound samples;
d) means (27) for deciding a MSB by majority in which a value of the MSB corresponding to the majority among the MSB's of each of the sound samples with respect to a sound sample group composed of a predetermined number of sound samples after receiving the compressed and transmitted sound samples is decided as a MSB of the sound samples of the group;
e) means (28) for protecting the MSB in which the MSB's of the sound samples from which errors are detected in said error detection means are corrected into another MSB's which are obtained in said means for deciding the MSB by majority; and
f) data expanding means (29) for receiving the sound samples of which the parity error is generated in said parity checker, the sound samples distinguished as having no first predetermined protection ranges in said means for distinguishing the sound samples according to the protection range, the sound samples from which errors are not detected in said error detection means, or the sound samples supplied from said MSB protection means, and for expanding predetermined data.

9. The error correction method according to claim 8, wherein said means for distinguishing the sound samples according to said protection range comprises:
a scale factor detector for detecting a scale factor of each of the sound samples which are supplied from said parity checker;
a protection range detector for receiving the sound samples supplied from said scale factor detector and outputting a predetermined selection signalwhen the sound samples having said first predetermined protection range are detected; and
a multiplexer for receiving the sound samples supplied from said scale factor detector and selectively outputting the sound samples having said first predetermined protection range or a second predetermined protection range among said sound samples according to said selection signal supplied from said protection range detector.

10. The error correction appartus according to claim 9, wherein said error detection means comprises:
a first comparator for receiving the sound samples of one of said first predetermined protection range which are output from said multiplexer and comparing the MSB with the bit next to the MSB; and
a second comparator for receiving the sound samples of the other of said first predetermined protection range which are output from said multiplexer and comparing the MSB with each of two bits next to the MSB.

11. The error correction apparatus according to calim 10, wherein said first comparator supplies the sound samples in which the MSB is not the same as the bit next to the MSB after comparison, to said MSB protector.

12. The error correction apparatus according to claim 10, wherein said second comparator supplies the sund samples in which the MSB is not the same as the bit firstly next to the MSB, the MSB is not the same as the bit secondly next to the MSB, and the MSB is not the same sa the bits firstly and secondly next to the MSB, to said MSB protector.

13. The error correction apparatus according to claim 11, wherein said MSB protector comprises means for correcting a value of the bit next to the MSB soa s to be the same as the MSB, with respect to the sound samples supplied from said first comparator.

14. The error correction apparatus according to claim 12, wherein said MSB protector comprises means for correcting a value of the bits firsly and secondly next to the MSB so as to be the same as the MSB, with respect to the sound samples supplied from said second comparator.

## Patentansprüche

1. Fehlerkorrekturverfahren zum Erfassen und Korrigieren von Fehlern von Tonproben, um komprimierte und übertragene Tonproben in ursprüngliche Daten mit Hilfe eines NICAM-Verfahrens zur Verwendung in einem D2-MAC-Tonsignaldecoder zu expandieren, **gekennzeichnet durch** die Verfahrensschritte:
(a) Durchführen einer Paritätsprüfung (21, 22) bezüglich der komprimierten und übertragenen Tonproben;
(b) Erhalten eines Schutzbereiches (23) bezüglich der Tonproben, die als Ergebnis der Paritätsprüfung keinen Paritätsfehler zeigen, und Unterscheiden der Tonproben nach Maßgabe jedes der Schutzbereiche:
(c) Erfassen von Fehlern (24, 25, 26) aus den Tonproben eines ersten vorbestimmten Schutzbereichs, der beim Schritt (b) unterschieden wurde;
(d) Bestimmen durch Majorität (27) eines MSB, indem ein Wert des MSB, der der Majorität unter den MSB's der Tonproben bezüglich einer vorbestimmten Tonprobengruppe entspricht, die aus den komprimierten und übertragenen Tonproben zusammengesetzt ist, als ein MSB der Tonproben der Gruppe bestimmt wird;
(e) Schützen (28) des MSB, indem die MSB's der Tonprobe, in denen Fehler beim Schritt (c) festgestellt wurden, in weitere MSB's korrigiert werden, die beim Schritt (d) erhalten wurden; und
(f) Expandieren (29) der Tonproben, von denen die MSB's beim Schritt (e) nach Maßgabe des Schutzbereiches geschützt wurden.

2. Fehlerkorrekturverfahren nach Anspruch 1, das die folgenden weiteren Verfahrensschritte aufweist:
(g) Durchführen der Datenexpansion bezüglich der Tonproben, bei denen als Ergebnis der Paritätsprüfung Paritätsfehler vorliegen;
(h) Durchführen der Datenexpansion bezüglich der Tonproben, die einen zweiten vorbestimmten Schutzbereich im Schritt (b) haben; und
(i) Durchführen der Datenexpansion bezüglich der Tonproben, von denen beim Schritt (c) Fehler nicht erfaßt wurden.

3. Fehlerkorrekturverfahren nach Anspruch 1, bei dem der Schritt (b) die Schritte aufweist:
(b1) Erfassen eines Skalierungsfaktors bezüglich der Tonproben, bei denen als Ergebnis der Paritätsprüfung kein Paritätsfehler vorhanden ist;
(b2) Erfassen eines Schutzbereiches, bei dem Tonproben, die den ersten vorbestimmten Schutzbereich haben, aus den Tonproben erfaßt werden, von denen der Skalierungsfaktor in dem Schritt (b1) erfaßt wurde; und
(b3) Multiplexen durch Auswahl der Tonproben aus dem ersten vorbestimmten Schutzbereich unter den Tonproben des Schrittes (b1), wenn die Tonproben des ersten vorbestimmten Schutzbereichs beim Schritt (b2) erfaßt wurden, und durch Auswahl der Tonproben des zweiten vorbestimmten Schutzbereiches unter den Tonproben des Schrittes (b1), wenn die Tonproben des ersten vorbestimmten Schutzbereiches beim Schritt (b2) nicht erfaßt wurden, und Übertragen der ausgewählten Tonproben.

4. Fehlerkorrekturverfahren nach Anspruch 3, bei dem der Schritt (c) die Schritte aufweist:
(c1) zuerst Vergleichen des MSB mit dem dem MSB nächstliegenden Bit bezüglich der Tonproben von einem des ersten vorbestimmten Schutzbereiches, die beim Schritt (b3) erhalten wurden; und
(c2) zweitens Vergleichen des MSB mit jedem der zwei Bits, die dem MSB am nächsten liegen bezüglich der Tonproben des anderen des ersten vorbestimmten Schutzbereiches, die beim Schritt (b3) erhalten wurden.

5. Fehlerkorrekturverfahren nach Anspruch 4, wobei der Schritt (e) die Schritte des Korrigierens des MSB der Tonproben in das MSB, das beim Schritt (d) erhalten wurde, und des Korrigierens eines Wertes des dem MSB nächstliegenden Bits aufweist, so daß dieses das gleiche wie das des MSB ist, bezüglich der Tonproben, bei denen zwei Bits in dem Schritt (c1) nicht identisch zueinander sind.

6. Fehlerkorrekturverfahren nach Anspruch 4, wobei der Schritt (e) die Schritte des Korrigierens des MSB der Tonproben, bei denen das MSB nicht das gleiche wie das Bit, das als erstes dem MSB am nächsten liegt ist, das MSB nicht das gleiche wie das Bit, das dem MSB als zweites am nächsten liegt, ist, oder das MSB nicht das gleiche wie die Bits, die dem MSB als erste und zweite am nächsten liegen, ist, in das MSB, das beim Schritt (d) erhalten wurde, und Korrigieren der Werte der Bits aufweist, die dem MSB als erste und zweite am nächsten liegen, so daß sie die gleichen sind, wie der des MSB.

7. Fehlerkorrekturverfahren nach Anspruch 1, wobei der Schritt (f) den Schritt des Einsetzens von Bitdaten aufweist, die den gleichen Wert wie der einer jeden der Tonproben haben, in jede der Tonproben durch eine vorbestimmte Anzahl, die entsprechend dem Schutzbereich bestimmt ist.

8. Fehlerkorrekturvorrichtung zum Erfassen und Korrigieren von Fehlern von Tonproben, um komprimierte und übertragene Tonproben in ursprüngliche Daten mit Hilfe eines NICAM-Verfahrens zur Verwendung in einem D2-MAC-Tonsignaldecoder zu expandieren, **gekennzeichnet durch:**
a) einen Paritätsprüfer (21) zum Empfangen der komprimierten und übertragenen Tonproben und zum Durchführen einer Paritätsprüfung;
b) eine Einrichtung (22) zum Empfangen der Tonproben, bei denen kein Paritätsfehler festgestellt wurde, und zum Unterscheiden der Tonproben nach Maßgabe eines jeden der Schutzbereiche;
c) eine Fehlererfassungseinrichtung (23, 24, 25, 26) zum Empfangen der Tonproben eines vorbestimmten Schutzbereiches, die von der Einrichtung zum Unterscheiden der Tonproben nach Maßgabe des Schutzbereiches zugeführt werden, und zum Erfassen von Fehlern aus den Tonproben;
d) eine Einrichtung (27) zum Bestimmen eines MSB durch Majorität, in dem ein Wert des MSB entsprechend der Majorität unter den MSB's einer jeden der Tonproben bezüglich einer Tonprobengruppe, die aus einer vorbestimmten Anzahl von Tonproben nach dem Empfang der komprimierten und übertragenen Tonproben zusammengesetzt ist, als ein MSB der Tonproben der Gruppe bestimmt wird;
e) eine Einrichtung (28) zum Schützen des MSB, in dem die MSB's der Tonproben, von denen Fehler in der Fehlererfassungseinrichtung festgestellt werden, in weitere MSB's korrigiert werden, die in der Einrichtung zum Bestimmen des MSB durch Majorität erhalten werden; und
f) eine Datenexpandiereinrichtung (29) zum Empfangen der Tonproben, von denen der Paritätsfehler in dem Paritätsprüfer erzeugt wird, der Tonproben, die in der Einrichtung zum Unterscheiden der Tonproben nach Maßgabe des Schutzbereiches als solche mit keinen ersten vorbestimmten Schutzbereichen unterschieden werden, der Tonproben, von denen keine Fehler in der Fehlererfassungseinrichtung erfaßt werden, oder der Tonproben, die von der MSB-Schutzeinrichtung zugeführt werden, und zum Expandieren vorbestimmter Daten.

9. Fehlerkorrekturvorrichtung nach Anspruch 8, wobei die Einrichtung zum Unterscheiden der Tonproben nach Maßgabe des Schutzbereiches aufweist:
einen Skalierungsfaktordetektor zum Erfassen eines Skalierungsfaktors für jede der Tonproben, die von dem Paritätsprüfer zugeführt werden;
einen Schutzbereichsdetektor zum Empfangen der von dem Skalierungsfaktordetektor zugeführten Tonproben und zum Ausgeben eines vorbestimmten Auswahlsignals, wenn die Tonproben mit dem ersten vorbestimmten Schutzbereich erfaßt werden; und
einen Multiplexer zum Empfangen der von dem Skalierungsfaktordetektor zugeführten Tonproben und zum selektiven Ausgeben der Tonproben, die den ersten vorbestimmten Schutzbereich oder einen zweiten vorbestimmten Schutzbereich unter den Tonproben nach Maßgabe des von dem Schutzbereichdetektor zugeführten Auswahlsignals haben.

10. Fehlerkorrekturvorrichtung nach Anspruch 9, wobei die Fehlerdetektoreinrichtung aufweist:
einen ersten Vergleicher zum Empfangen der Tonproben von einem des ersten vorbestimmten Schutzbereichs, die von dem Multiplexer ausgegeben werden, und zum Vergleichen des MSB mit dem dem MSB nächstliegenden Bit; und
einen zweiten Vergleicher zum Empfangen der Tonproben der anderen des ersten vorbestimmten Schutzbereiches, die von dem Multiplexer ausgegeben werden, und zum Vergleichen des MSB mit jedem der zwei dem MSB nächstliegenden Bits.

11. Fehlerkorrekturvorrichtung nach Anspruch 10, wobei der erste Vergleicher die Tonproben an die MSB-Schutzeinrichtung zuführt, in denen das MSB nicht das gleiche ist wie das dem MSB nach dem Vergleich nächstliegende Bit.

12. Fehlerkorrekturvorrichtung nach Anspruch 10, wobei der zweite Vergleicher die Tonproben an die MSB-Schutzeinrichtung zuführt, in denen das MSB nicht das gleiche wie das dem MSB nächstliegende erste Bit ist, das MSB nicht das gleiche wie das dem MSB nächstliegende zweite Bit ist, und das MSB nicht das gleiche wie die dem MSB nächstliegenden ersten und zweiten Bit ist.

13. Fehlerkorrekturvorrichtung nach Anspruch 11, wobei die MSB-Schutzeinrichtung eine Einrichtung zum Korrigieren eines Wertes des dem MSB nächstliegenden Bits aufweist, so daß dieses das gleiche ist wie das MSB bezüglich der von dem ersten Vergleicher zugeführten Tonproben.

14. Fehlerkorrekturvorrichtung nach Anspruch 12, wobei die MSB-Schutzeinrichtung eine Einrichtung zum Korrigieren eines Wertes der Bits aufweist, die dem MSB als erste und zweite nächstliegend sind, so daß sie die gleichen sind wie das MSB bezüglich der von dem zweiten Vergleicher zugeführten Tonproben.

## Revendications

1. Procédé de correction d'erreur destiné à détecter et corriger les erreurs d'échantillons sonores pour décompresser sous leur forme originale les données des échantillons sonores compressés et transmis, au moyen d'un procédé NICAM utilisé dans un décodeur de signal sonore D2-MAC, ledit procédé de correction d'erreur est caractérisé par le fait qu'il comporte les étapes de :
(a) mise en oeuvre d'une vérification de parité (21, 22) concernant les échantillons sonores compressés et transmis ;
(b) établissement d'un intervalle de protection (23) concernant les échantillons sonores qui ne présentent pas d'erreur de parité résultant de la vérification de parité et distinction des échantillons sonores en fonction de chacun des intervalles de protection ;
(c) détection des erreurs (24, 25, 26) à partir des échantillons sonores d'un premier intervalle prédéterminé qui a été distingué à l'étape (b) ;
(d) décision à la majorité d'un bit de poids fort où une valeur de bit de poids fort, correspondant à la majorité des bits de poids fort des échantillons sonores portant sur un groupe d'échantillons sonores prédéterminé composé des échantillons sonores compressés et transmis, est considérée comme un bit de poids fort des échantillons sonores du groupe ;
(e) protection (28) du bit de poids fort où le bit de poids fort des échantillons sonores dont les erreurs détectées à l'étape (c) sont corrigées dans d'autres bits de poids fort obtenus à l'étape (d) ; et
(f) décompression (29) des échantillons sonores dont les bits de poids fort sont protégés à l'étape (e) en fonction de l'intervalle de protection.

2. Procédé de correction d'erreur selon la revendication 1, dans lequel ledit procédé de correction d'erreur comprend en outre les étapes de :
(g) mise en oeuvre de la décompression concernant les échantillons sonores présentant des erreurs de parité suite à la vérification de parité ;
(h) mise en oeuvre de la décompression des données concernant les échantillons sonores ayant un second intervalle de protection prédéterminé à ladite étape (b) ; et
(i) mise en oeuvre de la décompression des données concernant les échantillons sonores dans lesquels des erreurs n'ont pas été détectées à l'étape (c).

3. Procédé de correction d'erreur selon la revendication 1, dans lequel ladite étape (b) comprend les étapes de :
(b1) détection d'un facteur d'échelle concernant les échantillons sonores dans lesquels ne figure pas d'erreur de parité suite à la vérification de parité ;
(b2) détection d'un intervalle de protection dans lequel les échantillons sonores ayant ledit premier intervalle de protection prédéterminé sont détectés parmi les échantillons sonores à partir desquels le facteur d'échelle a été détecté à l'étape (b1) ; et
(b3) multiplexage en sélectionnant les échantillons sonores dudit premier intervalle de protection prédéterminé parmi les échantillons sonores de ladite étape (b1) si les échantillons sonores dudit premier intervalle de protection prédéterminé sont détectés à ladite étape (b2), et en sélectionnant les échantillons sonores dudit second intervalle de protection prédéterminé parmi les échantillons sonores de ladite étape (b1) si les échantillons sonores dudit premier intervalle de protection prédéterminé ne sont pas détectés à ladite étape (b2) et en transmettant les échantillons sonores sélectionnés.

4. Procédé de correction d'erreur selon la revendication 3, dans lequel ladite étape (c) comprend les étapes de :
(cl) première comparaison du bit de poids fort avec le bit voisin du bit de poids fort portant sur les échantillons sonores de l'un desdits intervalles de protection prédéterminés qui sont obtenus à l'étape (b3) ; et
(c2) seconde comparaison du bit de poids fort avec chacun des deux bits voisins du bit de poids fort concernant les échantillons sonores de l'autre dit premier intervalle de protection prédéterminé, qui est obtenu à l'étape (b3).

5. Procédé de correction d'erreur selon la revendication 4, dans lequel ladite étape (e) comporte les étapes de correction du bit de poids fort des échantillons sonores dans le bit de poids fort qui est obtenu à ladite étape (d), et de correction d'une valeur du bit voisin du bit de poids fort de manière à ce qu'il soit identique au bit de poids fort, concernant les échantillons sonores où deux bits ne sont pas identiques l'un à l'autre à ladite étape (c1).

6. Procédé de correction d'erreur selon la revendication 4, dans lequel ladite étape (e) comporte les étapes de correction du bit de poids fort des échantillons sonores ou le bit de poids fort n'est pas identique au premier bit voisin du bit de poids fort, le bit de poids fort n'est pas identique au second bit voisin du bit de poids fort, ou le bit de poids fort n'est pas identique aux premier et second bits voisins du bit de poids fort, dans le bit de poids fort obtenu à ladite étape (d), et de correction des valeurs des premier et second bits voisins du bit de poids fort de manière à ce qu'ils soient identiques au bit de poids fort.

7. Procédé de correction d'erreur selon la revendication 1, dans lequel ladite étape (f) comprend les étapes d'insertion de données binaires de même valeur que celle de chacun des échantillons sonores dans chacun des échantillons sonores d'un nombre prédéterminé établi en fonction de l'intervalle de protection.

8. Dispositif de correction d'erreur destiné à détecter et corriger les erreurs des échantillons sonores pour décompresser sous leur forme originale les données des échantillons sonores compressés et transmis, au moyen d'un procédé NICAM utilisé dans un décodeur de signal sonore D2-MAC, ledit dispositif de correction d'erreur est caractérisé par le fait qu'il comporte :
(a) un vérificateur de parité (21) destiné à recevoir les échantillons sonores compressés et transmis, et à effectuer une vérification de parité ;
(b) un moyen (22) de réception des échantillons sonores dont il a été établi qu'ils ne présentaient pas d'erreur de parité et de distinction des échantillons sonores en fonction de chacun des intervalles de protection ;
(c) un moyen de détection des erreurs (23, 24, 25, 26) destiné à recevoir les échantillons sonores d'un intervalle de protection prédéterminé pour permettre la distinction des échantillons sonores en fonction de l'intervalle de protection, et à détecter les erreurs des échantillons sonores ;
(d) moyen (27) de décision à la majorité d'un bit de poids fort où une valeur du bit de poids fort, correspondant à la majorité des bits de poids fort des échantillons sonores portant sur un groupe d'échantillons sonores prédéterminé composé d'un nombre prédéterminé d'échantillons sonores après réception des échantillons sonores compressés et transmis, est considérée comme un bit de poids fort des échantillons sonores du groupe ;
(e) moyen (28) de protection du bit de poids fort où les bits de poids fort des échantillons sonores dont les erreurs détectées dans ledit moyen de détection d'erreur sont corrigées dans d'autres bits de poids fort obtenus dans ledit moyen de décision du bit de poids à la majorité ; et
(f) un moyen de décompression de données (29) destiné à recevoir les échantillons sonores dont l'erreur de parité est générée dans ledit vérificateur de parité, les échantillons sonores distingués comme n'ayant aucun premier intervalle de protection prédéterminé dans ledit moyen de distinction des échantillons sonores en fonction de l'intervalle de protection, les échantillons sonores dont les erreurs ne sont pas détectées dans ledit moyen de détection d'erreurs, ou les échantillons sonores produits par ledit moyen de protection de bit de poids fort, et à décompresser les données prédéterminées.

9. Dispositif de correction d'erreur selon la revendication 8, dans lequel ledit moyen de distinction des échantillons sonores en fonction dudit intervalle de protection comporte :
un détecteur de facteur d'échelle destiné à détecter un facteur d'échelle pour chacun des échantillons sonores produits par ledit vérificateur de parité ;
un détecteur d'intervalle de protection destiné à recevoir les échantillons sonores produits par ledit détecteur de facteur d'échelle et à produire un signal de sélection prédéterminé lorsque les échantillons sonores ayant ledit premier intervalle de protection prédéterminé sont détectés ; et
un multiplexeur destiné à recevoir les échantillons sonores produits par ledit détecteur de facteur d'échelle et à produire de manière sélective les échantillons sonores ayant ledit premier intervalle de protection prédéterminé ou un second intervalle de protection prédéterminé parmi lesdits échantillons sonores en fonction dudit signal de sélection fourni par ledit détecteur d'intervalle de protection.

10. Dispositif de correction d'erreur selon la revendication 9, dans lequel ledit moyen de correction d'erreur comporte :
un premier comparateur destiné à recevoir les échantillons sonores de l'un desdits premiers intervalles de protection prédéterminés produits par ledit multiplexeur et à comparer le bit de poids fort avec le bit voisin du bit de poids fort ; et
un second comparateur destiné à recevoir les échantillons sonores de l'autre desdits premiers intervalles de protection prédéterminés produits par ledit multiplexeur et à comparer le bit de poids fort avec chacun des deux bits voisins du bit de poids fort.

11. Dispositif de correction d'erreur selon la revendication 10, dans lequel ledit premier comparateur produit les échantillons sonores dans lesquels le bit de poids fort n'est pas identique au bit voisin du bit de poids fort après la comparaison, pour les appliquer audit protecteur de bit de poids fort.

12. Dispositif de correction d'erreur selon la revendication 10, dans lequel ledit second comparateur produit les échantillons sonores dans lesquels le bit de poids fort n'est pas identique au premier bit voisin du bit de poids fort, le bit de poids fort n'est pas identique au second bit voisin du bit de poids fort, et le bit de poids fort n'est pas indentique aux premier et second bits voisins du bit de poids fort, pour les appliquer audit protecteur de bit de poids fort.

13. Dispositif de correction d'erreur selon la revendication 11, dans lequel ledit protecteur de bit de poids fort comporte un moyen destiné à corriger une valeur du bit voisin du bit de poids fort pour qu'il soit identique au bit de poids fort, pour ce qui concerne les échantillons sonores produits par ledit premier comparateur.

14. Dispositif de correction d'erreur selon la revendication 12, dans lequel ledit protecteur de bit de poids fort comporte un moyen de correction d'une valeur des premier et second bits voisins du bit de poids fort de manière à ce qu'ils soient identiques au bit de poids fort, pour ce qui concerne les échantillons sonores produits par ledit second comparateur.
